# EUROPÄISCHE PATENTSCHRIFT

(11) **EP 0 285 211 B1**
(45) Veröffentlichungstag und Bekanntmachung des Hinweises auf die Patenterteilung: **13.10.1993**
(21) Anmeldenummer: 88200534.1
(22) Anmeldetag: 23.03.1988
(51) Int. Cl.: G10L 5/06

(54) **Verfahren zum Erkennen kontinuierlich gesprochener Wörter**
Method for detecting continually pronounced words
Procédé pour la reconnaissance de la parole continue

(30) Priorität: 30.03.1987 DE 3710507
(43) Veröffentlichungstag der Anmeldung: 05.10.1988
(73) Patentinhaber: Philips Patentverwaltung GmbH, 22335 Hamburg (DE); Philips Electronics N.V., 5621 BA Eindhoven (NL)
(72) Erfinder: Ney, Hermann, Dr., D-2000 Hamburg 54 (DE); Noll, Andreas, D-2000 Hamburg 53 (DE); Paeseler, Annedore, D-2000 Hamburg 54 (DE)
(74) Vertreter: Poddig, Dieter, Dipl.-Ing.

(56) Entgegenhaltungen:
- DE-A- 3 215 868
- PATENT ABSTRACTS OF JAPAN, unexamined applications, Sektion E, Band 1, Nr. 159, 16. Dezember 1977 THE PATENT OFFICE JAPANESE GOVERNMENT Seite 8587 E 77
- PATENT ABSTRACTS OF JAPAN, unexamined applications, Sektion E, Band 1, Nr. 153, 8. Dezember 1977 THE PATENT OFFICE JAPANESE GOVERNMENT Seite 8093 E 77

## Beschreibung

Die Erfindung betrifft ein Verfahren zum Erkennen eines aus kontinuierlich gesprochenen Wörtern abgeleiteten Sprachsignals, das aus einer zeitlichen Folge von Sprachwerten besteht, von denen jeder Sprachwert einen Abschnitt des Sprachsignals angibt, wobei die Sprachwerte nacheinander je mit mindestens einigen von vorgegebenen gespeicherten Vergleichswerten verglichen werden, von denen jeweils eine Gruppe von Vergleichswerten ein Wort eines vorgegebenen Vokabulars darstellt, und jedes Vergleichsergebnis zu einer minimalen Abstandssumme, die bei demselben Vergleichswert oder in vorgegebener Nachbarschaft liegenden Vergleichswerten beim vorhergehenden Sprachwert erreicht wurde, als neue Abstandssumme addiert und weiterverarbeitet wird, wenn diese Abstandssumme unter einem Schwellwert liegt, und aus der kleinsten Abstandssumme beim letzten Sprachwert des Sprachsignals durch Zurückverfolgen der Kette von Vergleichswerten, die zu dieser kleinsten Abstandssumme geführt hat, eine Folge von erkannten Wörtern bestimmt wird.

Ein derartiges Verfahren ist bekannt aus der DE-OS 32 15 868 und aus der Zeitschrift "IEEE Transactions on Acoustics, Speech, and Signal Processing", Vol. Assp-32, No. 2, April 1984, Seiten 263 bis 271. Dabei werden also ständig eine größere Anzahl verschiedener Folgen von Vergleichswerten und damit von Wörtern verfolgt, da es möglich ist, daß eine Folge, die vorübergehend nicht die kleinste Abstandssumme aufweist, sich beim Vergleich der weiteren Sprachwerte schließlich doch als am besten passend erweist. Als Sprachwerte wurden bei den bekannten Verfahren überwiegend Abtastwerte des Sprachsignals verwendet, die in 10 ms Abstand gewonnen und in ihre Spektralwerte zerlegt wurden. Es können jedoch auch andere Maßnahmen zur Aufbereitung der Sprachabtastsignale verwendet werden, ebenso können die Sprachwerte auch aus mehreren Abtastwerten gewonnen werden und beispielsweise Diphone oder Phoneme oder noch größere Einheiten darstellen, was das Verfahren nicht grundsätzlich ändert.

In der vorgenannten Zeitschrift ist außerdem die Möglichkeit angegeben, einzelne Folgen abzubrechen, wenn die Abstandssummen dafür relativ zu den anderen Abstandssummen sehr groß werden, d.h. einen von diesen abhängigen Schwellwert überschreiten. Dies soll nur relativ wenig zusätzlichen Rechenaufwand bei den einzelnen Vergleichen erfordern, jedoch insgesamt Rechenzeit sparen. In der Praxis führt dies bei einem größeren Vokabular jedoch zu zeitlichen Schwierigkeiten.

Dieser Sachverhalt soll an einem Beispiel verdeutlicht werden. Im Falle einer vollständigen Suche bei der Erkennung von Ziffernfolgen sind für jedes 10 ms Sprachsegment etwa 50 Hypothesen für jede Ziffer, also insgesamt 500 Hypothesen zu bearbeiten. Bei der Methode der reduzierten Suche wird der Suchbereich auf den (vermutlich) kritischen Bereich beschränkt. Die mittlere Zahl der dann erzeugten aktiven Hypothesen ist in der Regel nur ein Bruchteil der Gesamtanzahl der möglichen Hypothesen. Dieser Bruchteil hängt stark von der Größe des Vokabulars und der Art der syntaktischen Einschränkungen ab. Bei den Ziffern ohne irgendwelche syntaktischen Einschränkungen liegt er etwa bei 20-30 %. Der Speicherplatzbedarf bleibt unverändert. Bei jeder Hypothese muß geprüft werden, ob sie zur Zeit aktiv ist oder nicht. Dafür sind etwa 5 % der Zeit anzusetzen, die für das Abarbeiten einer 'aktiven' Hypothese benötigt werden.

Die Zahlen sehen deutlich anders aus, sobald man einen großen Wortschatz betrachtet. Bei einem Sprachmodell, bei dem effektiv etwa 30.000 Wörter mit einer mittleren Länge von 0,7 s zu verarbeiten sind, wäre bei konventioneller Suche der Speicherplatzbedarf etwa 30.000*70 = 2,1 Mio Speicherplätze mit je 2 Zellen allein für die interne Buchführung des Suchprogrammes erforderlich. Was den Rechenbedarf angeht, so wären in jedem Fall 5 % für die Überprüfung "aktive/nichtaktive Hypothese" anzusetzen: 5 % von 2,1 Mio = 105.000 Hypothesen. Die experimentelle Erfahrung zeigt, daß für eine zuverlässige Suche etwa 200 bis 10.000 aktive Hypothesen im Mittel ausreichen (im Fall des obigen Beispieles: 30.000 Wortübergänge, 'language perplexity' = 50). Mit anderen Worten heißt das, daß nur ein Zehntel der Rechenzeit auf die eigentliche Suche entfallen würde, der Rest würde nur verwendet, um festzustellen, daß etwa 99,5 % der möglichen Hypothesen im Mittel nicht aktiv sind. Darüber hinaus würde ein nicht mehr praktikabler Speicherplatzbedarf entstehen:
2,1 Mio Hypothesen * 2 Zellen * 4 Byte = 16,8 Megabyte.

Aufgabe der vorliegenden Erfindung ist es, das eingangs genannte Verfahren derart auszugestalten, daß tatsächlich der Speicherplatzbedarf und der Rechenaufwand allein durch die mittlere Zahl der aktiven Hypothesen bestimmt ist und von der Anzahl der insgesamt möglichen Hypothesen unabhängig ist, so daß es überhaupt erst möglich wird, die Erkennung mit vertretbarem Rechen- und Speicheraufwand durchzuführen.

Diese Aufgabe wird erfindungsgemäß dadurch gelöst, daß nach jedem Vergleich eines Sprachwertes mit ausgewählten Vergleichswerten alle neuen Abstandssummen mit dem Schwellwert verglichen und nur von denjenigen ausgewählten Vergleichswerten, deren zugeordneten neuen Abstandssummen unter dem Schwellwert liegen, die Adressen mit der neuen Abstandssumme übernommen und um Adressen erweitert werden, die in vorgegebener Nachbarschaft zu den übernommenen Adressen liegen, wobei die erweiterten Adressen die ausgewählten Vergleichswerte angeben, daß jeder dieser Adressen die kleinste der beim vergangenen Sprachwert erreichten Abstandssummen der in dieser Nachbarschaft liegenden Adressen, vermehrt um einen von der Nachbarschaft abhängigen Richtungswert, zugeordnet wird, daß beim anschließen den Vergleich des neuen Sprachwertes mit den Vergleichswerten dieser Adressen das dabei jeweils ermittelte Vergleichsergebnis zur zugeordneten Abstandssumme der betreffenden Adresse zum Bilden der neuen Abstandssumme aufaddiert wird, und daß diese Folge von Schritten für alle Sprachwerte wiederholt wird.

Da nur die Adressen der aktiven Vergleichswerte unmittelbar weitergegeben werden, ist es also nicht mehr erforderlich, alle Hypothesen daraufhin zu untersuchen, ob sie tatsächlich aktiv sind, sondern es werden nur die wirklich aktiven Hypothesen, d.h. die aktiven Vergleichswerte direkt adressiert.

Ferner ist das Fortführen der einzelnen Folgen bzw. Hypothesen mit jedem neuen Sprachwert gegenüber dem bekannten Verfahren geändert, indem nämlich nicht erst ein Sprachwert mit einem bestimmten Vergleichswert verglichen und der Abstand zwischen beiden ermittelt und danach geprüft wird, welches der vorhergehende Vergleichswert mit der niedrigsten Abstandssumme war, sondern jede Hypothese wird wirklich nur noch nach vorwärts verfolgt, wobei jede neue Abstandssumme quasi in zwei Schritten ermittelt wird, nämlich einmal durch das Zuordnen der kleinsten vorhergehenden Abstandssumme und zum anderen durch die Addition des aktuellen Abstands, jedoch stellt dies praktisch keinen erhöhten Zeitaufwand dar. Vor jedem Vergleich eines neuen Sprachwertes wird auf diese Weise die Anzahl der aktiven Hypothesen bzw. die Anzahl der aktiven Vergleichswerte jeweils um eine bestimmte Anzahl am oberen Ende vergrößert.

Besonders vorteilhaft ist das erfindungsgemäße Verfahren, wenn syntaktische Einschränkungen berücksichtigt werden sollen, d.h. nach einem bestimmten Wort können nur bestimmte andere Wörter folgen. Dadurch läßt sich die Anzahl der aktiven Hypothesen bzw. Folgen noch weiter erheblich verringern. Für die Berücksichtigung von syntaktischen Einschränkungen ist es daher zweckmäßig, daß die Adressen, deren Abstandssumme den Schwellwert überschreitet, in einer ersten Liste mit der Abstandssumme gespeichert werden, daß nach dem Vergleich der Abstandssumme eines Vergleichswerts, der am Ende einer ein Wort darstellenden Folge von Vergleichswerten liegt, mit dem Schwellwert bei dessen Unterschreiten diese Abstandssumme außerdem dem ersten Vergleichswert von solchen neuen Wörtern zugeordnet wird, die gemäß einer vorgegebenen zweiten Liste dem Wort folgen können, an deren Ende der ausgehende Vergleichswert liegt, sofern keine andere Folge, der dieselben neuen Wörter folgen und die eine niedrigere Abstandssumme hat, gleichzeitig endet. Die erste Liste ist zweckmäßig so organisiert, daß sie in jeder Zeile eine Angabe für ein Wort, in dem sich gerade eine aktive Hypothese bzw. eine Gruppe von aktiven Hypothesen befindet, sowie den ersten und den letzten Vergleichswert innerhalb der aktiven Hypothesen enthält. Es ist klar, daß in mehreren Wörtern gleichzeitig aktive Hypothesen sein können, d.h. die Liste enthält dann eine Anzahl Zeilen, die nacheinander aufgerufen werden, wobei dasselbe Wort auch in mehr als einer Zeile auftreten kann, nämlich wenn mehrere Gruppen von Hypothesen an verschiedenen Stellen darin aktiv sind.

Neue Wörter, die unmittelbar nach dem Vergleich der Abstandssummen mit dem Schwellwert begonnen werden, können dadurch berücksichtigt werden, daß die erste Liste um diese neuen Wörter lediglich ergänzt wird. Hierbei ist es günstig, wenn die erste Liste aus zwei Unterlisten besteht, von denen die erste Unterliste fortlaufend adressiert wird und an jeder Adressenstelle einen Hinweis auf ein Wort des Vokabulars und eine Adressenangabe für die zweite Unterliste enthält, die an jeder Adressenstelle die Adresse eines Vergleichswerts des jeweiligen Worts sowie die zu diesem Vergleichswert gehörenden Abstandssumme enthält. Die erste Liste wird also nach jedem Durchgang wieder neu gefüllt, so daß deren Inhalt stets dicht gespeichert ist und die Länge der Liste begrenzt bleibt.

Der Schwellwert für den Vergleich der Abstandssummen kann auf verschiedene Weise gefunden werden. Eine einfache, jedoch sehr wirksame Möglichkeit besteht darin, daß der Schwellwert der um einen festen Betrag vergrößerte kleinste Abstandswert ist, der bei dem jeweils zuletzt verglichenen Sprachwert ermittelt worden ist. Bei einem großen Wert des festen Betrags werden eine größere Anzahl von Hypothesen weiterverfolgt, während bei einem kleinen Wert des festen Betrags unter Umständen eine richtige Hypothese unterdrücken bzw. abschneiden kann, so daß der Wert dieses festen Betrages als Kompromiß bestimmt werden muß.

Anordnungen zur Durchführung des erfindungsgemäßen Verfahrens sind in den weiteren Unteransprüchen gekennzeichnet.

Ausführungsbeispiele der Erfindung werden nachstehend anhand der Zeichnung näher erläutert. Es zeigen:
- Fig. 1: ein schematisches Blockschaltbild mit einer Darstellung von Datenflüssen für die Erläuterung des gesamten erfindungsgemäßen Verfahrens,
- Fig. 2: den Aufbau von Listen in Speichern des Blockschaltbildes nach Fig. 1,
- Fig. 3: das Expandieren der Hypothesen nach Verarbeitung jeweils eines Sprachwertes,
- Fig. 4: ein Beispiel für ein Sprachmodell in Form eines Netzwerkes,
- Fig. 5: den Aufbau von Listen in Speichern des Blockschaltbildes nach Fig. 1 zur Berücksichtigung des Sprachmodells.

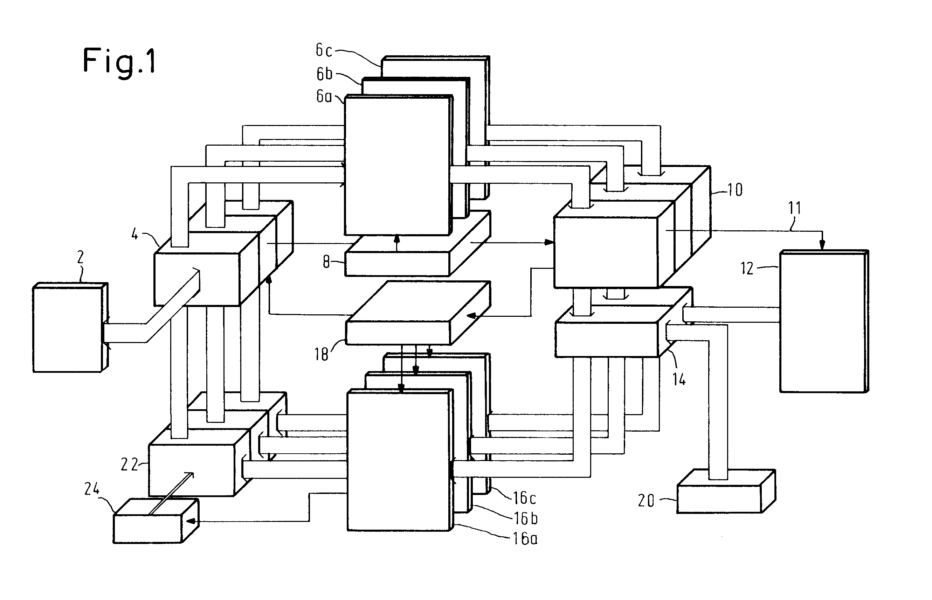

In Fig. 1 ist schematisch ein räumliches Blockschaltbild angedeutet, das eine Realisierung des Verfahrens mittels einzelner Geräteteile darstellt, das im folgenden jedoch im wesentlichen dazu benutzt wird, den Ablauf des Verfahrens zu beschreiben.

Der Block 12 bezeichnet einen Speicher, der Folgen von Vergleichswerten enthält, die jeweils ein Wort eines vorgegebenen Vokabulars angeben oder beschreiben. Der Speicher 12 wird über die Verbindung 11 adressiert.

Der Block 20 deutet die Eingabe der Sprachwerte bzw. deren Erzeugung aus dem Sprachsignal an. Ein Sprachwert kann dabei das Spektrum eines Abschnitts von 10 ms Dauer des Sprachsignals angeben, es kann aber auch ein aus mehreren derartigen Abschnitten des Sprachsignals abgeleiteter Wert sein, der beispielsweise ein Diphon oder ein Phonem angibt. Der genaue Aufbau des Sprachwertes spielt für die weitere Beschreibung keine Rolle, es müssen lediglich die Vergleichswerte im Speicher 12 in gleicher Weise erzeugt bzw. von Musterworten abgeleitet sein.

Jeder vom Block 20 erzeugte Sprachwert wird einem Block 14 zugeführt und darin nacheinander mit einer Anzahl Vergleichswerte aus dem Speicher 12 verglichen, und jeder Vergleich ergibt einen Abstandswert, der zu einer vorher für den jeweiligen Vergleichswert ermittelten Abstandssumme addiert wird. Diese vorhergehende Ermittlung der bisherigen Abstandssumme wird später erläutert.

Jede neue Abstandssumme wird vom Block 14 einem Speicher 16b zugeführt, und die Adresse des zugehörigen Vergleichswertes wird einem Speicher 16a zugeführt, während ein dritter Speicher 16c einen Rückwärtszeiger erhält. Die Speicher 16a bis 16c, die auch durch einen einzigen Speicher gebildet sein können, werden über eine in einem Speicher 18 gespeicherte Liste parallel adressiert, wobei dieser Speicher 18 fortlaufend adressiert wird, was nicht näher angegeben ist.

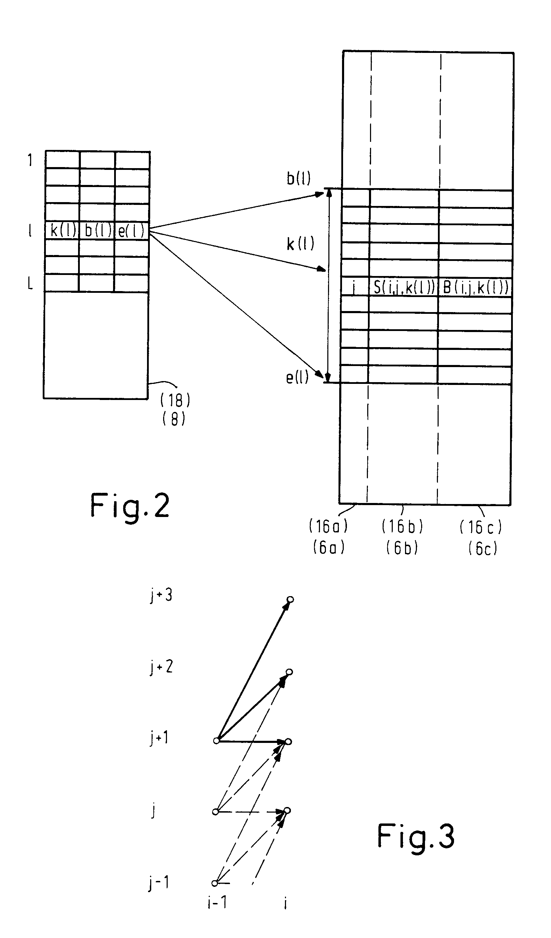

In Fig. 2 ist ein Beispiel für den Inhalt der Speicher 16a bis 16c und 18 in Form von Listen angedeutet. Die linke, im Speicher 18 enthaltene Liste umfaßt die Zeilen 1 bis L, die den Speicher nicht ganz ausfüllt. Im Verlauf der Verarbeitung der Sprachwerte des Sprachsignals kann diese Liste länger oder kürzer werden, je nachdem, wie viele Hypothesen gerade aktiv sind. Jede Zeile enthält drei Abschnitte, die in der Zeile l näher angegeben sind. Der erste Abschnitt k(l) gibt das Wort des Vokabulars an, in dem sich gerade aktive Hypothesen befinden, und die beiden anderen Abschnitte b(l) und e(l) geben den Anfang und das Ende des Bereichs der Vergleichswerte an, in dem sich die aktiven Hypothesen befinden, und zwar in Form von Adressen für die Speicher 16a bis 16c, deren Inhalt ebenfalls als Liste dargestellt ist. Damit bezeichnen die Werte b(l) und e(l) Anfangs- und Endzeile des Listenabschnitts k(l).

Jede Zeile dieser Liste des Speichers 16a bis 16c enthält drei Abschnitte, von denen jeder einem anderen der Speicher 16a bis 16c zugeordnet ist, die jedoch, wie bereits erwähnt, auch durch einen einzigen Speicher gebildet sein können. Der erste Abschnitt einer Zeile enthält die Adresse eines Vergleichswertes, d.h. die Stelle eines Vergleichswertes innerhalb eines Wortes k(l). Beide Angaben dienen zur Adressierung des Speichers 12 mit den Vergleichswerten. Der zweite Abschnitt enthält die für diesen Vergleichswert bisher festgestellte gesamte Abstandssumme S(i,j,k(l)) und der dritte Abschnitt einen Rückwärtszeiger B(i,j,k(l)). Die Funktion dieses Rückwärtszeigers B geht grundsätzlich aus der bereits erwähnten DE-OS 32 15 868 hervor.

Nachdem nun im Block 14 alle Vergleiche mit einem vom Block 20 gelieferten momentanen Sprachwert durchgeführt und die dabei entstandenen Werte in die Speicher 16a bis 16c gemäß der Adressierung über die Liste im Speicher 18 eingeschrieben worden sind, werden alle Werte nacheinander wieder ausgelesen und einem Vergleicher 22 zugeführt, wo die Abstandssummen S mit einem Schwellwert verglichen werden. Dieser Schwellwert wird von einem Block 24 geliefert, der den Schwellwert aus den gesamten, in den Speicher 16b eingeschriebenen Abstandswerten bestimmt, vorzugsweise dadurch, daß der kleinste Abstandswert ermittelt und danach um einen festen Betrag erhöht wird, um den Schwellwert zu bilden. Wenn dieser feste Betrag groß ist, sind sehr viele Hypothesen gleichzeitig aktiv, was den Rechenaufwand erhöht. Wenn jedoch der feste Betrag zu klein ist, wird unter Umständen die richtige Hypothese unterdrückt, weil sie vorübergehend etwas ungünstiger verlaufen ist. Dieser feste Betrag muß daher im Sinne eines Kompromisses gewählt werden. Es sind jedoch auch andere Möglichkeiten denkbar, beispielsweise den Schwellwert über ein Histogramm der Abstandssummen zu bilden.

Wenn beim Vergleich im Vergleicher 22 eine Abstandssumme den Schwellwert überschreitet, wird sie zusammen mit den zugehörigen, gleichzeitig ausgelesenen Werten unterdrückt und nicht weitergeleitet. Diejenigen Abstandssummen, die unterhalb der Schwelle liegen, werden zusammen mit den zugehörigen Werten im ersten und dritten Abschnitt zum Block 4 weitergeleitet, der die Wortübergänge einschließlich der syntaktischen Einschränkungen der zu erkennenden Wortfolge berücksichtigt, der jedoch der Einfachheit halber zunächst noch nicht berücksichtigt wird. Die vom Vergleicher 22 weitergeleiteten Werte gelangen somit zu Speichern 6a, 6b und 6c, die den Speichern 16a bis 16c entsprechen. Die Organisation der Werte in diesen Speichern 6a bis 6c ist ebenso wie in Fig. 2 in der rechten Liste angegeben, und diese Speicher werden durch einen weiteren Speicher 8 adressiert, der für die nicht unterdrückten Werte vom Speicher 18 die Angabe k(l) des Wortes, zu dem die weitergeleiteten Werte gehören, und die entsprechenden Adressen für die Speicher 6a bis 6c erhält. Der Inhalt des Speichers 8 ist durch das Abschneiden von Hypothesen im Vergleicher 22 gegenüber dem Inhalt des Speichers 18 verringert, d.h. die darin enthaltene Liste ist verkürzt, zumindest solange keine Wortgrenzen überschritten werden, jedoch ist auch die Liste im Speicher 8 dicht gefüllt, d.h. ohne Leerzeilen, so daß das Auslesen aus dieser Liste und dadurch das Auslesen aus den Speichern 6a bis 6c sehr effektiv und ohne Suche erfolgen kann. Die Speicher 6a bis 6c sind im übrigen ebenfalls automatisch ohne Lücke dicht gefüllt, so daß sich eine sehr effektive Speicherplatzauswertung ergibt. Die Speicher 8 und 18 könnten auch durch einen einzigen Speicher realisiert sein, was jedoch erhöhten Verwaltungsaufwand erfordert. Im übrigen können auch alle Speicher 6a bis 6c, 8, 16a bis 16c und 18 durch einen einzigen, entsprechend großen Speicher realisiert sein. Nachdem in die Speicher 6a bis 6c die Werte eingeschrieben sind, die die als aktiv übrig gebliebenen Hypothesen darstellen, werden diese Werte nacheinander durch entsprechende Steuerung über den Speicher 8 wieder ausgelesen und dem Block 10 zugeführt. Darin wird die Anzahl der aktiven Hypothesen wieder erweitert, d.h. es werden zusätzliche Vergleichswerte hinzugenommen, wie anhand der Fig. 3 näher erläutert werden soll.

Die kleinen Kreise stellen Vergleichswerte bzw. deren Adressenstellen dar, mit denen die eingehenden Sprachwerte verglichen werden. Der Sprachwert zu einem willkürlichen Zeitpunkt i-1 hat für eine Anzahl Vergleichswerte j-1, j und j+1 irgendeines Wortes Abstandssummen ergeben, die beim Vergleich mit dem Schwellwert erhalten geblieben sind. Im Block 10 werden nun ausgehend von diesen Adressen denjenigen Adressen, die in einer bestimmten Nachbarschaft dazu liegen, wie in Fig. 3 durch die Verbindungen der Punkte angegeben ist, die jeweils kleinste Abstandssumme der entsprechenden benachbarten Adressen, vermehrt um einen von der Richtung abhängigen festen Richtungswert, zugeordnet. Die festen Richtungswerte sollen einen diagonalen Verlauf der Hypothesen bevorzugen, da dies etwa der wahrscheinlichste Verlauf ist. Der dieser Richtung zugehörige feste Richtungswert kann daher auch gleich Null gesetzt werden. Es wird also der Adresse j+1 die kleinste bisherige Abstandssumme der Adressen j-1,j und j+1, jeweils vermehrt um den festen Richtungswert, als neue Zwischen-Abstandssumme zugeordnet. Die Adressen j+2 und j+3 werden nun jedoch neu aufgenommen, wobei letzterem die Abstandssumme der Adresse j+1 und der neuen Adresse j+2 die kleinste Abstandssumme der beiden Adressen j+1 und j, ebenfalls jeweils vermehrt um den zugehörigen festen Richtungswert, zugeordnet wird. Gleichzeitig mit der Abstandssumme wird an den Adressen selbstverständlich auch der zugehörige Rückwärtszeiger gespeichert.

Zu jeder der so gewonnenen Zwischen-Abstandssumme wird im Block 14 nun wieder der Abstand zwischen dem nächsten Sprachwert i und den nacheinander aus dem Speicher 12 ausgelesenen Vergleichswerten hinzuaddiert, wodurch sich die neue Abstandssumme für diesen Vergleichswert ergibt. Die dem Speicher 12 über die Leitung 11 zugeführten Adressen zum Aufrufen der Vergleichswerte werden bezüglich des Wortes von der Liste im Speicher 8 und bezüglich der Vergleichswerte innerhalb des Wortes von dem Inhalt des Speichers 6a zuzüglich der Erweiterung gemäß Fig. 3 geliefert. Die Bildung der neuen Zwischen-Abstandssummen einschließlich der erweiterten Vergleichswerte kann dabei in einem geschlossenen Ablauf vollständig erfolgen und danach erst die Addition der Abstände zwischen Vergleichswert und Sprachwert durchgeführt werden, jedoch können die beiden Vorgänge auch zeitverschachtelt quasi gleichzeitig ablaufen.

Der Block 10 liefert ferner die Angabe über die Wörter, in denen aktive Hypothesen vorhanden sind, vom Speicher 8 zum Speicher 18 und ferner die erweiterten Vergleichswerte für insbesondere den letzten Abschnitt der Liste im Speicher 18, d.h. der Wert e(l) wird um 2 erhöht, und mit diesen Werten der Liste im Speicher 18 werden dann die Speicher 16a bis 16c adressiert, um die Adressen der nun gültigen Vergleichswerte, der zugehörigen Abstandssummen und der Rückwärtszeiger einzuschreiben. Damit ist also ein Zyklus abgeschlossen und der nächste begonnen.

Abweichungen ergeben sich bei diesem Zyklus nur bei Wortübergängen an einer Stelle, nämlich im Block 4. Wenn ein Vergleichswert, dessen zugehörige Abstandssumme die Schwelle im Block 22 passiert hat, am Ende der Folge von Vergleichswerten eines Wortes liegt, müssen Hypothesen in weiteren Wörtern eröffnet werden. Falls keine syntaktischen Einschränkungen verwendet werden, können dies alle Wörter des Vokabulars sein. Dies führt bei einem großen Vokabular jedoch zu einem erheblichen nachfolgenden Rechenaufwand, und die Möglichkeit von Falscherkennungen wird dadurch stark erhöht. Es ist also zweckmäßig, syntaktische Einschränkungen zu berücksichtigen.

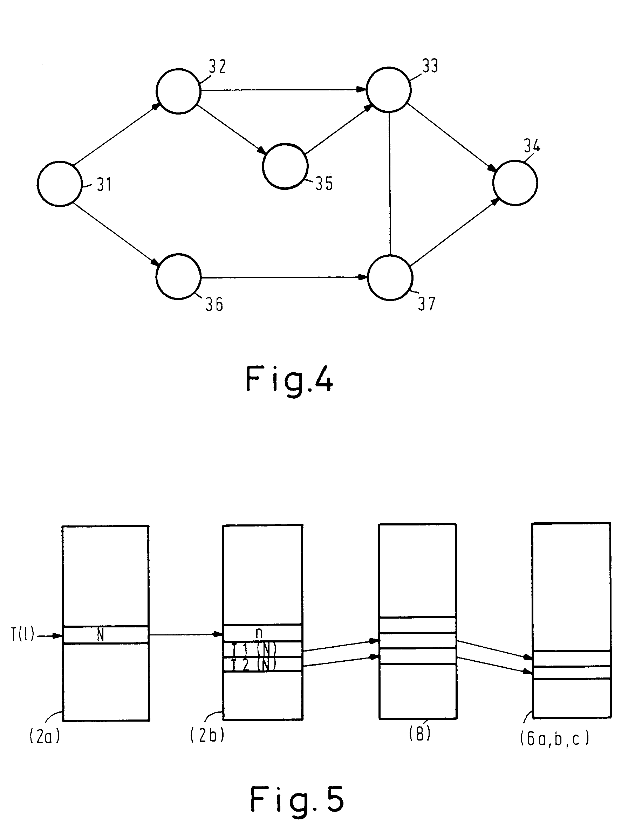

Ein stark vereinfachtes Beispiel für derartige Einschränkungen ist in Fig. 4 angegeben, wobei die Kreise sogenannte Knoten und die Pfeile sogenannte Übergänge darstellen, wobei jeder Pfeil allgemein für mehrere Übergänge steht. Jeder Übergang stellt dabei ein Wort des Vokabulars dar. Von jedem Knoten gehen also eine Anzahl bestimmter Wörter aus, und jeder Knoten kann auch nur von bestimmten Wörtern erreicht werden. Zur Erleichterung des Verständnisses des in Fig. 4 dargestellten Modells sei angenommen, daß der Knoten 31 den Startknoten darstellt, so daß die von diesem Knoten 31 ausgehenden Pfeile den Anfang eines Satzes bilden. Der Pfeil vom Knoten 31 zum Knoten 32 kann beispielsweise mehrere Übergänge darstellen, die je einen Artikel darstellen, d.h. nur wenige mögliche Wörter aus dem Vokabular. Der Pfeil vom Knoten 32 zum Knoten 33 kann beispielsweise ein Substantiv darstellen, wofür also wesentlich mehr Übergänge bzw. Wörter des Vokabulars in Frage kommen werden. Der Pfeil vom Knoten 33 zum Knoten 35 kann dagegen ein Adjektiv darstellen, und der Pfeil vom Knoten 35 zum Knoten 33 wiederum ein Substantiv. Daraus ist bereits zu erkennen, daß zumindest einige Wörter an mehreren Stellen innerhalb des Netzwerkes auftreten können. Der Pfeil vom Knoten 33 zum Knoten 34 kann ein Verb darstellen, so daß der Weg vom Knoten 31 zum Knoten 34 einen einfachen, grammatisch korrekten Satz bildet. In entsprechender Weise kann der Weg vom Knoten 31 über die Knoten 36 und 37 zum Knoten 34 eine andere Satzstruktur darstellen. Tatsächlich sind solche für die Spracherkennung verwendeten Sprachmodelle allgemein komplexer aufgebaut und werden lediglich durch den erforderlichen Rechen- und Speicheraufwand begrenzt.

Die technische Realisierung eines als Netzwerk gemäß Fig. 4 gegebenen Sprachmodells ist in Fig. 5 in Verbindung mit Fig. 1 angedeutet. Der Block 2 in Fig. 1 stellt im wesentlichen einen Speicher dar, der die in Fig. 5 angedeuteten beiden Listen 2a und 2b enthält. Wie bereits anhand der Fig. 4 erläutert, kann ein und dasselbe Wort an mehreren Übergängen zwischen verschiedenen Knoten auftreten, so daß aus dem Wort allein nicht ohne weiteres erkennbar ist, welche Wörter danach kommen können, sondern dies hängt ab von der Stelle bzw. dem jeweiligen Übergang, in dem das Wort aufgetreten ist. Aus diesem Grunde ist es zweckmäßiger, bei dem anhand der Fig. 1 beschriebenen Ablauf anstelle von Wörtern bzw. Wortnummern mit Übergangsnummern zu arbeiten, die fortlaufend numeriert sind, so daß eine Übergangsnummer zwar eindeutig einem Wort zugeordnet ist, jedoch ein Wort zu mehreren Übergangsnummern gehören kann. Diese Zuordnung ist jedoch praktisch nur an einer Stelle von Bedeutung, nämlich bei der Adressierung des Speichers 12 mit den Vergleichswerten, so daß in dem Block 10 eine Übersetzung der Übergangsnummer in die Wortnummer erforderlich ist, um die Adresse auf der Leitung 11 zu erzeugen, während in den Listen in den Speichern 8 und 18 an der ersten Stelle nicht die Wortnummer, sondern die in diesem Zusammenhang eindeutige Übergangsnummer enthalten ist.

Wenn nun also ein vom Vergleicher 22 weitergeleiteter Vergleichswert bzw. die Adresse dieses Vergleichswertes am Ende des Übergangs liegt, wird im Block 2 der Speicher 2a mit der vom Speicher 18 gelieferten Übergangsnummer T(l) adressiert und liefert die Nummer des Knotens, in dem dieser Übergang nach dem Sprachmodell endet. Diese Knotennummer wird zusammen mit der Übergangsnummer und der zugehörigen Abstandssumme sowie dem Rückwärtszeiger zwischengespeichert. Dies geschieht bei jedem weiteren Übergang, dessen Ende beim selben Sprachwert erreicht wird, jedoch nur dann, wenn die zugehörige Knotennummer noch nicht oder mit einer größeren Abstandssumme zwischengespeichert war, wobei im letzteren Fall die betreffende vorhandene Speicherung gelöscht wird.

Nachdem der Inhalt der Speicher 6a bis 6c über den Speicher 8 vollständig ausgelesen und die nicht unterdrückten Werte in die Speicher 16a bis 16c bzw. 18 eingeschrieben sind, wird von den zwischengespeicherten Knotennummern N ein weiterer Speicher 2b in Fig. 5 adressiert, der an der zugehörigen Adresse die von diesem Knoten ausgehenden Übergänge enthält, genauer gesagt die Anzahl dieser Übergänge, während die Übergänge an den folgenden Speicherstellen im Speicher 2b aufgelistet sind und nacheinander ausgelesen werden. Jede so ausgelesene Übergangsnummer T1(N) wird über den Block 4 in die Liste im Speicher 8 eingetragen, und gleichzeitig wird im Speicher 6a die Adresse des ersten Vergleichswertes eingetragen, während in die Speicher 6b und 6c die Abstandssumme des endenden Übergangs und der entsprechende Rückwärtszeiger eingetragen werden. Auf diese Weise werden die Hypothesen am Ende jedes Übergangs bzw. Worts auf einfache Weise erweitert, so daß der weitere Ablauf in gleicher Weise erfolgt wie bei Hypothesen, die innerhalb eines Übergangs bzw. Wortes verlaufen. Im Block 10 werden nämlich die mit dem ersten Vergleichswert angefangenen neuen Wörter in grundsätzlich gleicher Weise, wie anhand der Fig. 3 erläutert wurde, erweitert, und ebenso wird die erweiterte Liste des Speichers 8 an den Speicher 18 weitergegeben.

Im übrigen ist es bei der Benutzung des anhand der Fig. 4 beschriebenen Sprachmodells auch möglich, sogenannte "leere" Übergänge zu berücksichtigen, d.h. beispielsweise zuzulassen, daß vom Knoten 31 ohne Berührung des Knotens 36 direkt zum Knoten 37 übergegangen werden kann. Dies ist bei dem Aufbau der in Fig. 5 dargestellten Listen 2a und 2b einfach dadurch möglich, daß von dem Übergang T(l) nicht nur ein Knoten, sondern mehrere Knoten entsprechend den zugelassenen leeren Übergängen adressiert werden. Dadurch muß also nur die Liste 2a entsprechend länger sein, während die Liste 2b davon unberührt bleibt.

Wie aus dem in Fig. 4 angedeuteten Sprachmodell erkennbar, ist es zweckmäßig, den anhand der Fig. 1 beschriebenen Ablauf vor dem Vergleichen des ersten Sprachwertes mit den Blöcken 2 und 4 beginnen zu lassen, wo also der bzw. die als Beginn zugelassenen Knoten aufgerufen und die dazugehörigen Übergänge abgeleitet und in die Liste im Speicher 8 eingetragen werden. Dadurch ist dann der Beginn der Suche bei dem ersten zugeführten Sprachwert auf einfache Weise festgelegt.

## Patentansprüche

1. Verfahren zum Erkennen eines aus kontinuierlich gesprochenen Wörtern abgeleiteten Sprachsignals, das aus einer zeitlichen Folge von Sprachwerten besteht, von denen jeder Sprachwert einen Abschnitt des Sprachsignals angibt, wobei die Sprachwerte nacheinander je mit mindestens einigen von vorgegebenen gespeicherten Vergleichswerten verglichen werden, von denen jeweils eine Gruppe von Vergleichswerten ein Wort eines vorgegebenen Vokabulars darstellt, und jedes Vergleichsergebnis zu einer minimalen Abstandssumme, die bei demselben Vergleichswert oder in vorgegebener Nachbarschaft liegenden Vergleichswerten beim vorhergehenden Sprachwert erreicht wurde, als neue Abstandssumme addiert und weiterverarbeitet wird, wenn diese Abstandssumme unter einem Schwellwert liegt, und aus der kleinsten Abstandssumme beim letzten Sprachwert des Sprachsignals durch Zurückverfolgen der Kette von Vergleichswerten, die zu dieser kleinsten Abstandssumme geführt hat, eine Folge von erkannten Wörtern bestimmt wird,
dadurch gekennzeichnet, daß nach jedem Vergleich eines Sprachwertes mit ausgewählten Vergleichswerten alle neuen Abstandssummen mit dem Schwellwert verglichen und nur von denjenigen ausgewählten Vergleichswerten, deren zugeordneten neuen Abstandssummen unter dem Schwellwert liegen, die Adressen mit der neuen Abstandssumme übernommen und um Adressen erweitert werden, die in vorgegebener Nachbarschaft zu den übernommenen Adressen liegen, wobei die erweiterten Adressen die ausgewählten Vergleichswerte angeben, daß jeder dieser Adressen die kleinste der beim vergangenen Sprachwert erreichten Abstandssummen der in dieser Nachbarschaft liegenden Adressen, vermehrt um einen von der Nachbarschaft abhängigen Richtungswert, zugeordnet wird, daß beim anschließen den Vergleich des neuen Sprachwertes mit den Vergleichswerten dieser Adressen das dabei jeweils ermittelte Vergleichsergebnis zur zugeordneten Abstandssumme der betreffenden Adresse zum Bilden der neuen Abstandssumme aufaddiert wird, und daß diese Folge von Schritten für alle Sprachwerte wiederholt wird.

2. Verfahren nach Anspruch 1,
dadurch gekennzeichnet, daß die Adressen, deren Abstandssumme den Schwellwert überschreitet, in einer ersten Liste mit der Abstandssumme gespeichert werden, daß nach dem Vergleich der Abstandssumme eines Vergleichswerts, der am Ende einer ein Wort darstellenden Folge von Vergleichswerten liegt, mit dem Schwellwert bei dessen Unterschreiten diese Abstandssumme außerdem dem ersten Vergleichswert von solchen neuen Wörtern zugeordnet wird, die gemäß einer vorgegebenen zweiten Liste dem Wort folgen können, an deren Ende der ausgehende Vergleichswert liegt, sofern keine andere Folge, der dieselben neuen Wörter folgen und die eine niedrigere Abstandssumme hat, gleichzeitig endet.

3. Verfahren nach Anspruch 1 oder 2,
dadurch gekennzeichnet, daß die erste Liste aus zwei Unterlisten besteht, von denen die erste Unterliste fortlaufend adressiert wird und an jeder Adressenstelle einen Hinweis auf ein Wort des Vokabulars und eine Adressenangabe für die zweite Unterliste enthält, die an jeder Adressenstelle die Adresse eines Vergleichswerts des jeweiligen Worts sowie die zu diesem Vergleichswert gehörenden Abstandssumme enthält.

4. Verfahren nach einem der Ansprüche 1 bis 3,
dadurch gekennzeichnet, daß der Schwellwert der um einen festen Betrag vergrößerte kleinste Abstandswert ist, der bei dem jeweils zuletzt verglichenen Sprachwert ermittelt worden ist.

5. Anordnung zur Durchführung des Verfahrens nach einem der Ansprüche 1 bis 4 mit
- einem ersten Speicher (12) für Vergleichswerte,
- einer Eingangsanordnung (20) zum Erzeugen von elektrischen Sprachwerten aus einem akustisch eingegebenen Sprachsignal,
- einer Verarbeitungsanordnung (14) zum Vergleichen der Sprachwerte mit den Vergleichswerten und zum Erzeugen von Abstandssummen,
- eine Vergleichsanordnung (22, 24) zum Vergleichen der Abstandssummen mit einem Schwellwert und zum Durchlassen der unter dem Schwellwert liegenden Abstandssummen,
dadurch gekennzeichnet, daß eine erste Erweiterungsanordnung (10) vorgesehen ist, die die von der Vergleichsanordnung (20, 24) gelieferten Abstandssummen zusammen mit den Adressen der dazu gehörenden Vergleichswerte im ersten Speicher (12) empfängt und in der vorgegebenen Nachbarschaft dieser Adressen liegende weitere Adressen bildet und für jede dieser Adressen die kleinste Abstandssumme der in vorgegebener Nachbarschaft liegenden Adressen ermittelt und um einen von der Nachbarschaft abhängigen Richtungswert zu einer Zwischensumme erhöht und diese zusammen mit der jeweiligen Adresse der Verarbeitungsanordnung (14) zuführt.

6. Anordnung nach Anspruch 5,
dadurch gekennzeichnet, daß eine zweite Erweiterungsanordnung (2, 4) vorgesehen ist, die die von der Vergleichsanordnung durchgelassenen Adressen der Vergleichswerte mit den zugehörigen Abstandssummen empfängt und in einen zweiten Speicher (6a, 6b, 6c, 8) einschreibt und für jeden Vergleichswert am Ende eines Wortes außerdem die Adressen der ersten Vergleichswerte von solchen weiteren Wörtern erzeugt, die gemäß einem dritten Speicher (2) demjenigen Wort folgen können, an dessen Ende der Vergleichswert liegt, sofern dieses Wort die kleinste Abstandssumme von allen anderen möglicherweise gleichzeitig endenden Wörtern hat, denen dieselben weiteren Wörter folgen, und diese erzeugten Adressen zusätzlich in den zweiten Speicher (6a, 6b, 6c, 8) einschreibt.

7. Anordnung nach Anspruch 6,
dadurch gekennzeichnet, daß ein vierter Speicher (16a, 16b, 16c, 18) vorgesehen ist, der die von der Verarbeitungsanordnung (14) abgegebenen Adressen von für den letzten Vergleich benutzten Vergleichswerten mit den Abstandssummen aufnimmt und danach an die Vergleichsanordnung (22, 24) abgibt.

8. Anordnung nach Anspruch 6 oder 7,
dadurch gekennzeichnet, daß der zweite und der vierte Speicher (6a, 6b, 6c, 8; 16a, 16b, 16c, 18) aus je zwei Teilspeichern besteht, von denen jeweils der eine Hinweise auf diejenigen Wörter, für deren Vergleichswerte Adressen gespeichert sind, sowie je Wort eine Adressenangabe auf den anderen Teilspeicher enthält und dieser andere Teilspeicher jeweils an den angegebenen Adressen die Adressen der Vergleichswerte dieses Wortes sowie mindestens die zugehörigen Abstandssummen enthält.

## Claims

1. A method for recognizing a speech signal which is derived from continuously spoken words and which consists of a temporal sequence of speech values, each of which indicates a segment of the speech signal, the speech values being successively compared with at least some predetermined, stored reference values, each time a group of reference values representing a word of a given vocabulary, each comparison result being added to a minimum distance sum, reached for the same reference value or for reference values situated within a predetermined vicinity, for the preceding speech value so as to form a new distance sum for further processing if this distance sum is below a threshold value, a sequence of recognized words being determined from the smallest distance sum upon the last speech value of the speech signal by retracing the chain of reference values having produced this smallest distance sum,
characterized in that, after each comparison of a speech value with selected reference values, all new distance sums are compared with the threshold value, the addresses with the new distance sum, being taken over only for those selected reference values whose associated new distance sums are below the threshold value, said addresses being expanded to addresses which are situated within a predetermined vicinity of the addresses taken over, the expanded addresses indicating the selected reference values, that with each of these addresses there is associated the smallest of the distance sums, reached for the preceding speech value, of the addresses situated within said vicinity, increased by a directional value which is dependent on the vicinity, that during the subsequent comparison of the new speech value with the reference values of these addresses the comparison result each time determined is added to the associated distance sum of the relevant address in order to form the new distance sum, and that this sequence of steps is repeated for all speech values.

2. A method as claimed in Claim 1, characterized in that the addresses whose distance sum exceeds the threshold value are stored in a first list with the distance sum, that after the comparison of the distance sum of a reference value, situated at the end of a sequence of reference values representing a word, with the threshold value this distance sum is also associated, when it is lower than the threshold value, with the first reference value of new words which may succeed the word in conformity with a second predetermined list and at the end of which there is situated the outgoing reference value, in as far as no other sequence, following the same new words and having a smaller distance sum, terminates at the same time.

3. A method as claimed in Claim 1 or 2, characterized in that the first list consists of two sub-lists, the first sub-list being continuously addressed and containing, in each address position, a reference to a word of the vocabulary and an address indication for the second sub-list which contains, in each address position, the address of a reference value of the relevant word as well as the distance sum associated with this reference value.

4. A method as claimed in any one of the Claims 1 to 3, characterized in that the threshold value is the smallest distance value which has been determined for the respective last speech value compared, increased by a fixed amount.

5. A device for performing the method claimed in any one of the Claims 1 to 4, comprising
- a first memory (12) for reference values,
- an input device (20) for generating electric speech values from an acoustically entered speech signal,
- a processing device (14) for comparing the speech values with the reference values and for generating distance sums,
- a comparison device (22,24) for comparing the distance sums with a threshold value and for passing on the distance sums below the threshold value,
characterized in that there is provided a first expansion device (10) which receives the distance sums supplied by the comparison device (20, 24), together with the addresses of the associated reference values in the first memory (12), which forms further addresses situated within the predetermined vicinity of these addresses, which determines, for each of these addresses, the smallest distance sum of the addresses situated within the predetermined vicinity, and which increases this sum by a directional value which is dependent on the vicinity, in order to form an intermediate sum which is applied, together with the relevant address, to the processing device (14).

6. A device as claimed in Claim 5, characterized in that there is provided a second expansion device (2,4) which receives the addresses of the reference values, passed on by the comparison device, with the associated distance sums so as to write them into a second memory (6a, 6b, 6c, 8) and which, moreover, generates, for each reference value at the end of a word, the addresses of the first reference values of further words which, in conformity with a third memory (2), can succeed the word at the end of which the reference value is situated in as far as this word has the smallest distance sum of all other possibly simultaneously terminating words which are succeeded by the same further words, and which also writes these generated addresses into the second memory (6a, 6b, 6c, 8).

7. A device as claimed in Claim 6, characterized in that there is provided a fourth memory (16a, 16b, 16c, 18) which stores the addresses, supplied by the processing device (14), of reference values used for the last comparison, together with the distance sums, for subsequent delivery to the comparison device (22,24).

8. A device as claimed in Claim 6 or 7, characterized in that the second and the fourth memory (6a, 6b, 6c, 8; 16a, 16b, 16c, 18) consist of two respective sub-memories, each time one of which contains references to the words for the reference values of which there are stored addresses, as well as per word an address indication to the other sub-memory, said other sub-memory containing, each time at the indicated addresses, the addresses of the reference values of this word as well as at least the associated distance sums.

## Revendications

1. Procédé d'identification d'un signal vocal dérivé de mots prononcés en continu, lequel signal est constitué d'une séquence temporelle de valeurs vocales qui désignent chacune un segment du signal vocal, les valeurs vocales étant comparées l'une après l'autre respectivement à au moins quelques valeurs de comparaison mémorisées prédéfinies, parmi lesquelles, respectivement, un groupe de valeurs de comparaison représente un mot d'un vocabulaire prédéfini, et le résultat de chaque comparaison est ajouté à une somme d'écarts minimale, qui a été obtenue, pour la valeur vocale précédente, avec la même valeur de comparaison ou avec des valeurs de comparaison voisines prédéfinies en tant que nouvelle somme d'écarts et est retraitée, lorsque cette somme d'écarts se trouve en dessous d'une valeur de seuil, et une séquence de mots identifiés est déterminée à partir de la plus petite somme d'écarts pour la dernière valeur vocale du signal vocal en remontant la chai'ne des valeurs de comparaison qui a abouti à cette somme d'écarts la plus petite, caractérisé en ce que, après chaque comparaison d'une valeur vocale avec des valeurs de comparaison choisies, toutes les nouvelles sommes d'écarts sont comparées à la valeur de seuil et ce n'est que parmi les valeurs de comparaison choisies, dont les nouvelles sommes d'écarts associées sont en dessous de la valeur de seuil, que les adresses avec la nouvelle somme d'écarts sont prises en compte et augmentées d'adresses qui se situent au voisinage prédéfini des adresses prises en compte, les adresses augmentées indiquant les valeurs de comparaison choisies, qu'à chacune de ces adresses est affectée la plus petite des sommes d'écarts atteintes pour la valeur vocale précédente des adresses qui se trouvent dans ce voisinage, augmentée d'une valeur de direction dépendant du voisinage, que le résultat de comparaison respectivement obtenu est ajouté, lors de la comparaison suivante de la nouvelle valeur vocale avec les valeurs de comparaison de ces adresses, à la somme d'écarts associée de l'adresse en question pour former la nouvelle somme d'écarts et que cette séquence d'étapes est répétée pour toutes les valeurs vocales.

2. Procédé selon la revendication 1, caractérisé en ce que les adresses, dont la somme d'écarts dépasse la valeur de seuil, sont mémorisées dans une première liste avec la somme d'écarts, qu'après la comparaison de la somme d'écarts d'une valeur de comparaison, qui se trouve à la fin d'une séquence de valeurs de comparaison représentant un mot, avec la valeur de seuil, lorsqu'elle s'avère être inférieure à celle-ci, cette somme d'écarts est en outre affectée à la première valeur de comparaison de nouveaux mots qui, selon une seconde liste prédéfinie peuvent suivre le mot à la fin duquel se trouve la valeur de comparaison de départ, pour autant qu'aucune autre séquence que ces mêmes nouveaux mots suivent et qui présente une somme d'écarts plus faible, ne se termine simultanément.

3. Procédé selon la revendication 1 ou 2, caractérisé en ce que la première liste est constituée de deux sous-listes, dont la première est adressée en continu et contient, pour chaque position d'adresse, un renvoi à un mot du vocabulaire et une indication d'adresse pour la seconde sous-liste, qui contient elle-même, à chaque position d'adresse, l'adresse d'une valeur de comparaison du mot respectif ainsi que la somme d'écarts appartenant à cette valeur de comparaison.

4. Procédé selon l'une quelconque des revendications 1 à 3, caractérisé en ce que la valeur de seuil est la valeur d'écart la plus petite augmentée d'une quantité fixe, qui a été déterminée pour la valeur vocale respectivement comparée en dernier lieu.

5. Montage permettant de réaliser le procédé selon l'une quelconque des revendications 1 à 4, comportant :
- une première mémoire (12) pour des valeurs de comparaison,
- un dispositif d'entrée (20) pour produire des valeurs vocales électriques à partir d'un signal vocal introduit par voie acoustique,
- un dispositif de traitement (14) pour comparer les valeurs vocales aux valeurs de comparaison et pour produire des sommes d'écarts,
- un dispositif de comparaison (22,24) pour comparer les sommes d'écarts à une valeur de seuil et pour laisser passer les sommes d'écarts qui se trouvent en dessous de la valeur de seuil,
caractérisé en ce qu'un premier dispositif d'extension (10) est prévu, qui reçoit les sommes d'écarts fournies par le dispositif de comparaison (20,24) avec les adresses des valeurs de comparaison associées dans la première mémoire (12) et forme d'autres adresses qui se trouvent au voisinage prédéfini de ces adresses et, pour chacune de ces adresses, la plus petite somme d'écarts des adresses qui se trouvent au voisinage prédéfini est calculée et est augmentée d'une valeur de direction dépendant du voisinage pour obtenir une somme intermédiaire qui est acheminée conjointement avec l'adresse respective au dispositif de traitement (14).

6. Montage selon la revendication 5, caractérisé en ce qu'un second dispositif d'extension (2,4) est prévu qui reçoit les adresses des valeurs de comparaison que le dispositif de comparaison a laissé passer avec les sommes d'écarts associées, les transcrit dans une seconde mémoire (6a, 6b, 6c, 8) et, pour chaque valeur de comparaison qui se trouve à la fin d'un mot, produit, en outre, les adresses des premières valeurs de comparaison d'autres mots qui peuvent suivre, selon une troisième mémoire (2), le mot à l'extrémité duquel se trouve la valeur de comparaison, pour autant que ce mot ait la plus petite somme d'écarts de tous les autres mots se terminant éventuellement en même temps, que ces mêmes autres mots suivent, et transcrit ces adresses obtenues, en outre, dans la seconde mémoire (6a, 6b, 6c, 8).

7. Montage selon la revendication 6, caractérisé en ce qu'une quatrième mémoire (16a, 16b, 16c, 18) est prévue qui stocke les adresses de valeurs de comparaison utilisées pour la dernière comparaison, délivrées par le dispositif de traitement (14) avec les sommes d'écarts et les fournit ensuite au dispositif de comparaison (22,24).

8. Montage selon la revendication 6 ou 7, caractérisé en ce que les deuxième et quatrième mémoires (6a, 6b, 6c, 8; 16a, 16b, 16e, 18) sont constituées respectivement de deux mémoires partielles dont respectivement la première contient un renvoi aux mots pour les valeurs de comparaison desquels des adresses sont mémorisées, ainsi que, pour chaque mot, une indication d'adresse sur l'autre mémoire partielle et cette autre mémoire partielle contient respectivement, aux adresses indiquées, les adresses des valeurs de comparaison de ce mot ainsi qu'au moins les sommes d'écarts associées.
